Europäisches Patentamt

European Patent Office

Office européen des brevets

(11) Publication number: **0 576 800 A1**

# EUROPEAN PATENT APPLICATION

(21) Application number: **93107144.3**

(22) Date of filing: **03.05.93**

(51) Int. Cl.5: **B64C 1/00**

(30) Priority: **30.06.92 SU 5050049**

(43) Date of publication of application:
**05.01.94 Bulletin 94/01**

(84) Designated Contracting States:
**AT BE CH DE DK ES FR GB GR IT LI LU MC NL PT SE**

(71) Applicant: **AVIATIKA JOINT-STOCK COMPANY**
**33 a, Leningradsky prospect**
**125284 Moskow(RU)**

(72) Inventor: **Michailovich, Jidovetsky Kazimir**
**4, flat 82,**
**2nd Novopodmoskovny pereulok**
**125130 Moscow(RU)**

(74) Representative: **Patentanwälte Zellentin & Partner**
**Zweibrückenstrasse 15**
**D-80331 München (DE)**

(54) **Acrobatic airplane.**

(57) This invention belongs to aeronautical engineering sphere, particularly to an acrobatic airplanes. The achieved technical results of this invention are the following: the reduction of the dynamic loads on the engine cowling, which are created by the air rejected by the propeller; the improvement of the airflow over the wing and over the airplane fuselage by the rejected air masses; the increasing of the propeller efficiency and safety in case of the emergency escape; the increasing of the wing lift force and it's weight reduction; the improvement of the airplane control and load reduction in the control systems, at the control stick. The airplane contains the fuselage 1, the wing 14 with the ailerons 15 and the flaps 16, the tail unit with the tailplane 9 and the fin 11, the spring landing gear with the main landing gear legs 18 and with the tailwheel unit 17, and the power plant with the engine 5 and the propeller 7. The outer wing 14 panels have the wing leading edge root extensions 33. The belly fence 30 has the lower edge which is in parallel with the airplane longitudinal datum line. The propeller 7 spinner 8 has the spinner extention 20. The engine is enclosed by the cowling 6 in the developed Tawnend circle form. The cockpit 2 canopy has the hingeing part 4, which consists of the canopy transparency 21 and the canopy frame 22. The front part 24 of the frame 22 is fulfilled as a part of the upper curvilinear surface of the fuselage 1, as the blind of the instrument panel. In the pitch channel of the manual control system, the elevator 10 trim tab-balance 35 is installed. The rudder 12 has the balance 13, which is installed at the blunt trailing edge and is fulfilled demountable with the possibility of rearrangement.

EP 0 576 800 A1

Fig.1

The invention belongs to aeronautical engineering sphere, particularly to an acrobatic airplanes.

The two-seat French airplane MUDRI CAP 10B is known. It is used as a training, as a light acrobatic and as a tourist airplanes. The airplane is designed as a monoplane with the low-set wing; with the dihedral angle of 5°. The nonretractable wheeled landing gear is equiped with the tail wheel. The airplane is equiped with one AVKO LAYCOMING AE 10-360-B2F piston engine of 180 horsepower, which brings the wooden two-bladed propeller into operation (see the Technical Information of the Central AeroHydrodynamical Institute (CAHI), No 14, 1984, page 16-17, fig 32).

Su-26M airplane, the mostly close technical decision to the suggested one, is taken as a prototype. This airplane contains the fuselage with the cockpit, enclosed by the hingeing canopy, which consists of the stationary and the hingeing parts; the engine-propeller power unit located at the fuselage nose part equiped with the tractor propeller with the propeller spinner; the tail unit of a normal lay-out with the elevator and the rudder; the low-set wing with the high-lift devices along the wing trailing edge; the manual control system, which links the control stick with the wing ailerons and with the elevator; the foot pedal control system, which links the pilot's pedals with the rudder by the control circuit; and the tricycle spring landing gear with the tailwheel unit (see "The modeler - the designer" magazine, No 11, 1987, page 13-16).

The airplane fuselage has the truss framework, and the two-spar wing. The airplane has the radial nine-cylinder air-cooled piston engine M-14P of 360 horsepower.

Making an estimate of the technique level in existence, it is worth noting that, this sphere of the aircraft building is enough studied and is represented by a great variety of the aircrafts, which meet all the requirments that can be imposed upon the aircrafts of this class. Yet, the prototype, specifically possesses some constructional features, which adversely effect the airplane characteristics. By way of example, the radial M-14P engine, being a good engine for the aircrafts of this class has the greater diameter of the cowling in comparison with the in-line engines. The propeller, spaced closely to the engine is functioning under the unfavourable conditions. It's efficiency reduces, and on the contrary the dynamic loads on the engine cowling increase owing to the air mass, flunged by the propeller. It makes sense to transfer the propeller plane of rotation ahead of the engine and the cowling. This permits to prevent all the above-listed drawbacks and "to prepare" the air mass, flunged by the propeller, for flowing over the cowling and over the fuselage. M-14P - is the air-cooled engine and therefore it is necessary to solve the problem of the heated up cooling air extraction. At the prototype, this problem is solved by the installation of the shutters at the side surface of the cowling. Yet, such a heated up cooling gas extraction is not favourable to the improvement of the airflow over the wing by the approach airflow. The width of the canopy hingeing part depends on the width of the canopy transparency framework.Yet, this dimention is less than the fuselage diameter, and this doesn't increase the pilot's safety in the case of emergency escape. The fact that there is no elevator trim tab at the prototype doesn't allow to ensure the constancy of the control-stick force, perceptible to the pilot at certain regimes, especially at the aerobatic airplanes. In the airplane reverse flight when it performs an acrobatic maneuver, the deflected airfoils, the rudder and the tailplane take up one of their extreme positions. The limit stops are installed in the control linkage in order to avoid damage. And as a consequence when the controls are put over, the pilot perceives the strike at the control stick. Some other problems arise in the design of an acrobatic airplanes.

The problem which is solved by this invention-is the creation of a simple, reliable and the secure acrobatic airplane, which is easy to control, to produce and to operate, the creation of the airplane in which the problems of the stability, the controllability and the problems, connected with the acrobatic airplanes structural features can be solved most efficiently, and so forth.

The achieved technical results of this invention are the following:

- alleviation of the air dynamic loads on the engine cowling which are created by the propeller;
- improvement of the airflow over the wing and over the airplane fuselage by the rejected air masses;
- increasing of the propeller efficiency;
- improvement of safety in the case of emergency escape;
- increasing of the wing lift force and it's weight reduction;
- improvement of the airplane control and the load alleviation in the control systems and on the controls at the cockpit.

The applied technical result is provided by the fact that, in the acrobatic airplane containing the fuselage with the cockpit, enclosed by the hingeing canopy, which consists of the stationary and the hingeing parts; the power plant, located at the fuselage nose part, which consists of the engine, enclosed by the cowling along its perimeter, and the tractor propeller, which has the propeller spinner; the tail unit of a normal lay-out, which consists of the tailplane with the elevator and the fin with the rudder (the rudder has the balance, fulfilled as a metal flanged plane, installed at the rudder trailing edge); the low-set wing with the high-lift devices along the wing trailing edge; the manual control system, governed by the control stick, the

3

foot pedal control system, governed by the pilot's pedals and the control linkages; the tricycle spring landing gear with the tailwheel unit, according to the invention, the cowling outboard edge section, which encloses the engine along the perimeter, is modelled on the wing airfoil section, and the cowling itself is fulfilled in the developed extended Tawnend circle form, which is rigidly connected with the fuselage nose part by the load-bearing struts, forming the exhaust air blower ducts of the engine cylinder heads, all along the perimeter of the cowling, and which is provided with the stationary propeller spinner extention proportional to the maximum spinner diameter, it extends ahead of the cowling front edge, being rigidly connected with the cowling, the spinner extention is fulfilled cylindrical as an aerodynamic propeller spinner extension; the cockpit canopy consists of the stationary part, rigidly connected with the fuselage, and the hingeing part, fulfilled as the frame with the transparency, the hingeing part is installed at the fuselage by the hinges, which are spaced apart at a distance equal to the maximum fuselage width, and the plane of the frame lower section of the canopy hingeing part is located lower than the maximum width plane of the transparency cross-section and is parallel to it, the hinge units of the canopy hingeing part are located at its frame back part, and are in line with each other, with the arrangement of their axes normally to the fuselage longitudinal axis, they are located between the cross-section maximum width plane of the canopy hingeing part transparency and the plane of its frame lower section, the front part of the frame is fulfilled as a part of the upper curvilinear surface of the fuselage, which mates with it as the blind of the instrumental panel, the fuselage is equiped with the longitudinal vertical belly fence with its lower edge parallel to the airplane longitudinal datum line, where the control linkages of the elevator and of the rudder are located, the spring of the tail landing gear leg also passes through the belly fence, the rudder lower edge is fulfilled as an extension of it and is also parallel to the airplane longitudinal datum line; the engine bay is provided with the tubular air manifold, receiving the engine-compartment cooling air, with the provision of the heated air extraction from the branch pipe located under the fuselage nose part; the wing is provided with the flap and with the wing leading edge root extension , which increases the wing area flowed by the propeller and served by the flap, the engine output shaft to the propeller passes through the stationary spinner extention, the pilot's seat with the seat-back controlled reclining angle is provided with the seat-back reclining device; the rudder trailing edge is blunt and the rudder balance is fulfilled demountable and rearrangable, and the elevator trim tab-balance is installed in the pitch channel of the manual control system.

The canopy is provided with the cross tube with the bracket, connecting the canopy hingeing part hinges together, and with the resilient member, which connects the bracket to the airplane fuselage, each of the canopy hingeing part hinge units is produced as a slider bearing, rigidly fitted to the airplane fuselage (the end of the cross tube is installed inside the slider bearing by the bush and the shoulder with the possibility of sliding) and the movable axle-journal, installed by its one end inside the tube with the pin pressed in, the ends of the pin are located in the aligned grooves turned on the cross tube and on the bush and interact with the diametrically opposite curvilinear grooves (turned on the slider bearings), which have smoothly mated radial and helical sections, the free end of each axle-journal is manufactured as a right prism interacting with the associated bed, which is turned on the hollow bush, fixed at the hingeing canopy part, the axled movement of the right prism of a movable axle-journal end in the hollow bush bed is less than the axled movement of the movable axle-journal pin in the curvilinear grooves of the slider bearing along the both sections.

In the manual control system the control stick is provided with the probe, rigidly connected with it, being its extension, the probe comes out through the pilot's cabin floor beyond the fuselage lower contours and is provided with the bracket, which is rigidly fitted on it and is connected with the additional rod of the controlled length with the drive unit, the trim tab - balance is fulfilled as an aerodynamic surface of a small extension, hinged to a probe free end, the additional rod of the controlled length is hinged by its one end to the trim tab-balance at some distance from trim tab-balance hingeing point at the probe, and by another is connected with the drive unit, hinged to the probe bracket, the elevator control linkage runs from the probe bracket.

The control stick with the grip, hung up by the axis at the central control beam and connected with the pitch linkage control rods, has a built-in extensile lever, which is fitted into it with the possibility of the axial transferal, the roll linkage control rods and the stirrup are hinged to the extensile lever lower end, and at the same time the stirrup has its opposite end hinged to the central control beam.

Each half of the elevator contains the elevator spar, the support bracket and the elevator bracket which connects the spar with the C-shaped support bracket, the support bracket free ends are rigidly connected by the profiled plane, the elevator spar is tubular and the elevator itself is hinged to the profiled plane in such a way that the elevator tubular spar locates at some distance ahead of the elevator hinge axis following the direction of flight, the profiled plane has the limit stops, which interact with the tubular spar at the extreme positions of the elevator.

The cowling outboard edge profile, patterned after the wing aerodynamic section with its chord parallel to the airplane longitudinal datum line, is specified and determined by the following tabulated data:

| $\overline{X}_B$ | 0 | 0,05 | 0,10 | 0,15 | 0,2 | 0,3 | 0,35 |
|---|---|---|---|---|---|---|---|
| $\overline{Y}_B$ | 0 | 0,071 | 0,10 | 0,114 | 0,121 | 0,132 | 0,136 |

| $\overline{X}_B$ | 0,4 | 0,5 | 0,6 | 0,7 | 0,8 | 0,9 | 1,0 |
|---|---|---|---|---|---|---|---|
| $\overline{Y}_B$ | 0,132 | 0,121 | 0,107 | 0,086 | 0,064 | 0,029 | 0 |

The rudder is provided with the $\Pi$ - shaped load-bearing member, which forms its blunt trailing edge, and the rudder balance is fulfilled as a $\Gamma$ - shaped plane, screwed by it's snubber to the $\Pi$ - shaped load - bearing member with the possibility of the removal and rearrangement, the anchor nuts, matching the balance screws, are installed at the $\Pi$ -shaped load - bearing member.

In the tail contour framework of each airplane aerodynamic controls, the framework is fulfilled as a sheet, which forms the upper and the lower framework panels, where cutouts with the flangings and the shoulders are fulfilled, and the controls each have the trailing aerodynamic edge, formed by the sheet bending line, the upper and the lower panels flanges are in pairs jointed with each other, and the distance between the panels fits in with the control aerodynamic profile at each point.

The upper and the lower panels flanges are lap-spliced between each other.

The canopy is equiped with the demountable nosing-over safe guard, internal in reference to the canopy transparency, it is installed at the canopy hingeing part framework by the hinge units at the junction of it and the canopy transparency.

The seat-back reclining device is designed as a worm-and-worm pair, with its rod connected with the seat-back, the seat - back is provided with the drive unit in the hydraulic or in the pneumatic cylinder form with the locks, respectively connected with the airplane hydro or pneumatic systems.

The invention is explained by the following drawings:

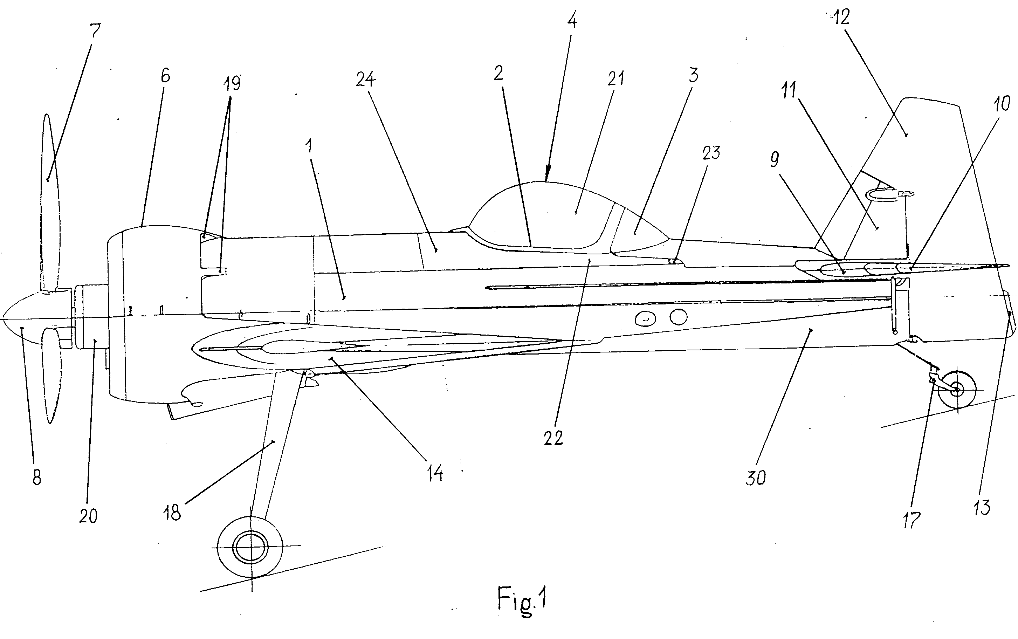

fig.1 - an acrobatic airplane is shown, the side view;

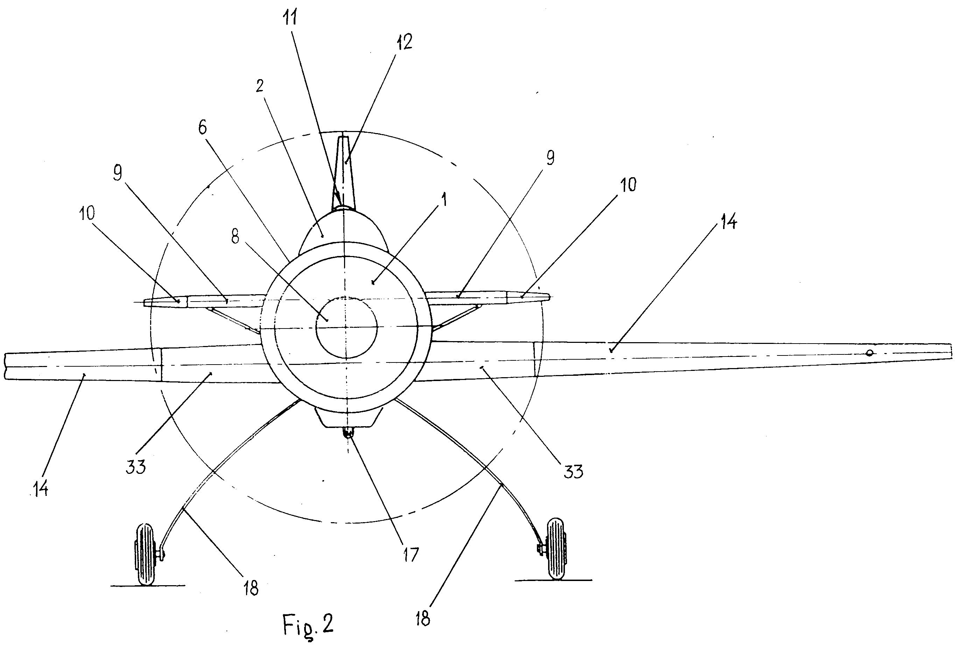

fig.2 - the same, the front view;

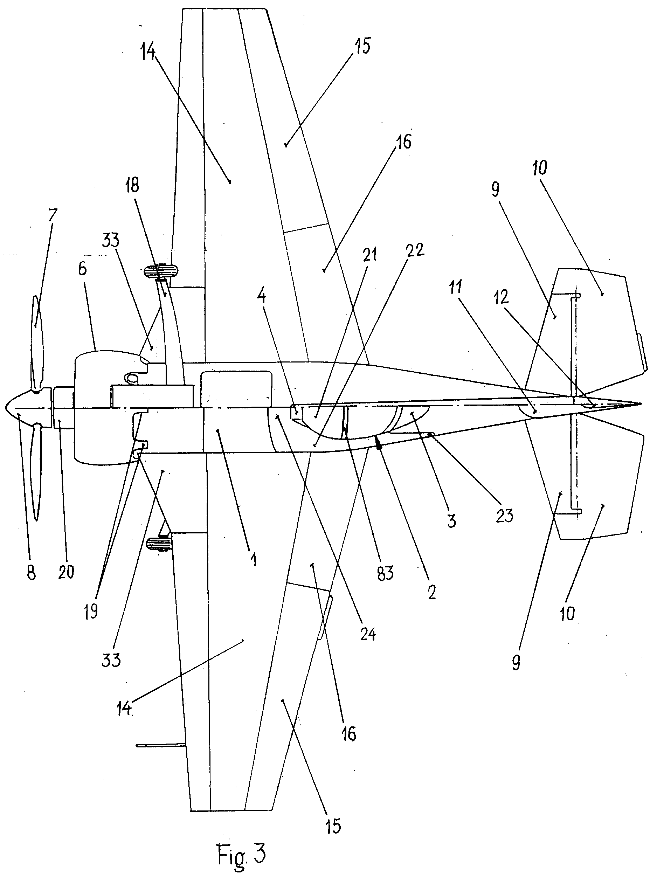

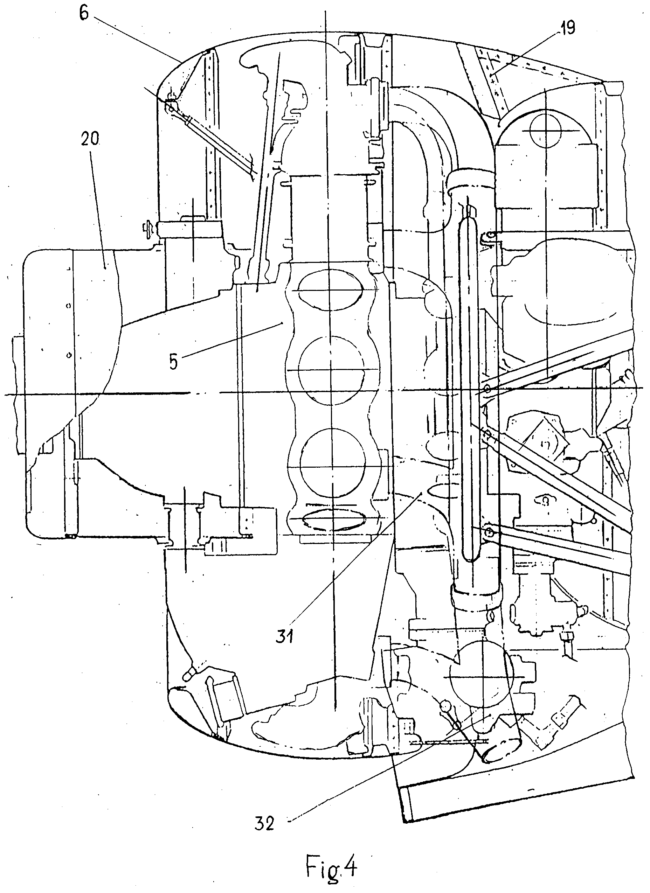

fig.3 - the same, the plan view; fig.4 - the fuselage nose part with the engine bay and the cowling;

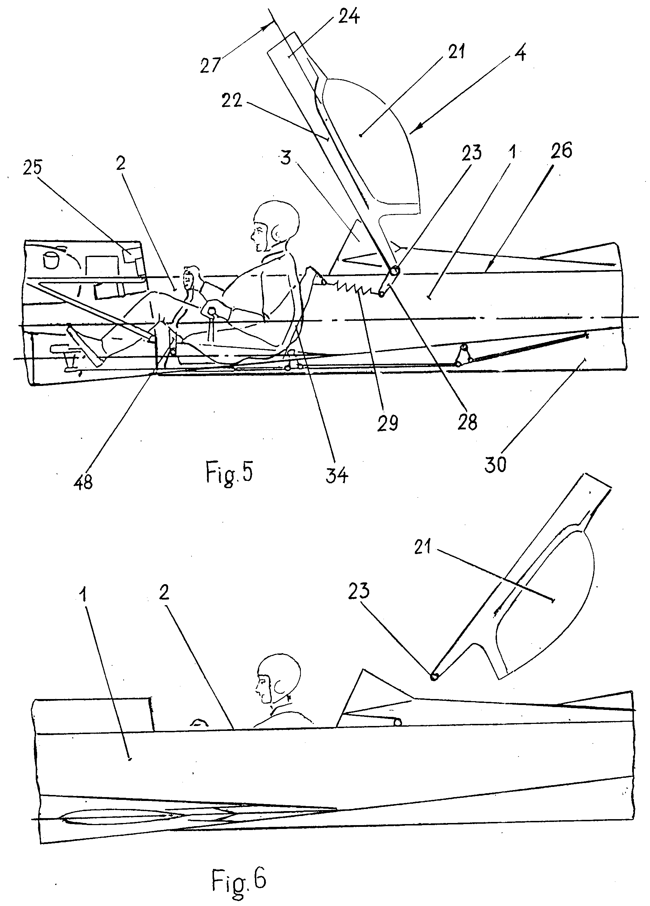

fig.5 - the cockpit canopy in the open position;
fig.6 - the cockpit canopy with the separated hingeing part;

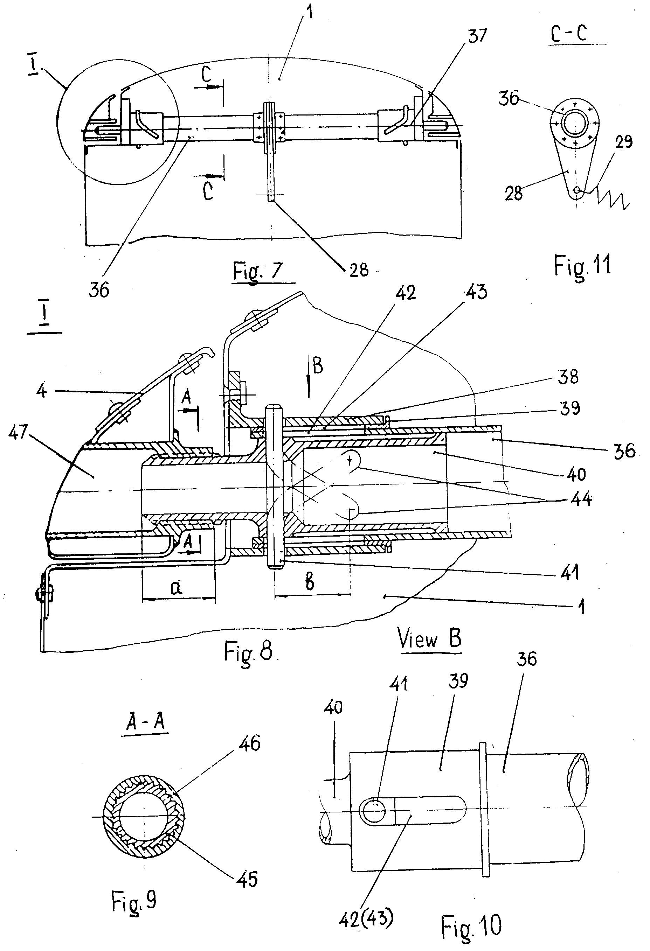

fig.7 - the hinge unit of the cockpit canopy hingeing part;
fig.8 - unit I fig.7;
fig.9 - the sectional view A-A fig.8;
fig.10 - the view B fig.8;

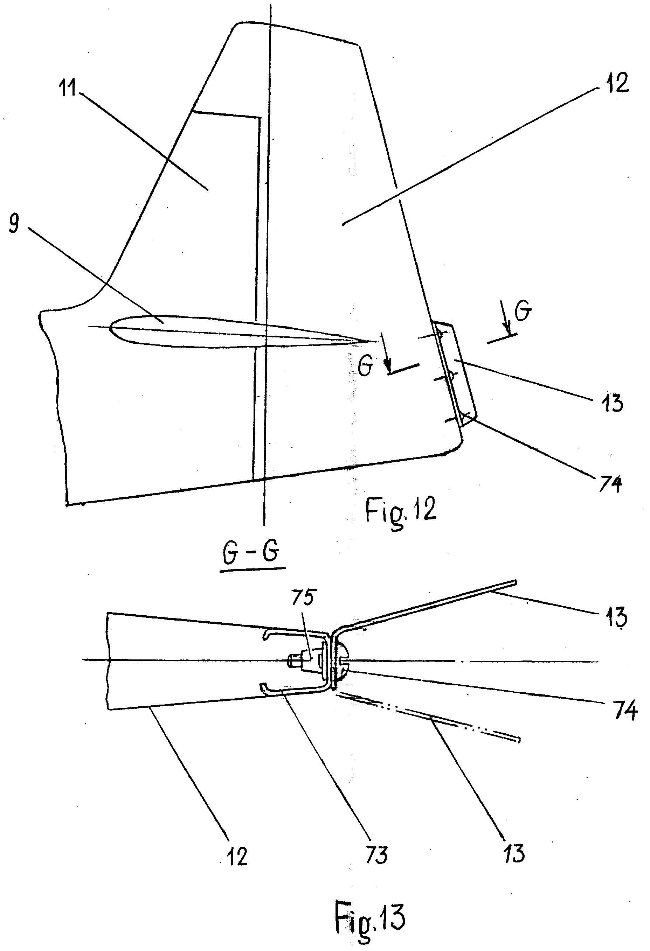

fig.11 - the sectional view C-C fig.7;
fig.12 - the rudder with the rudder balance;
fig.13 - the sectional view G-G fig.12;

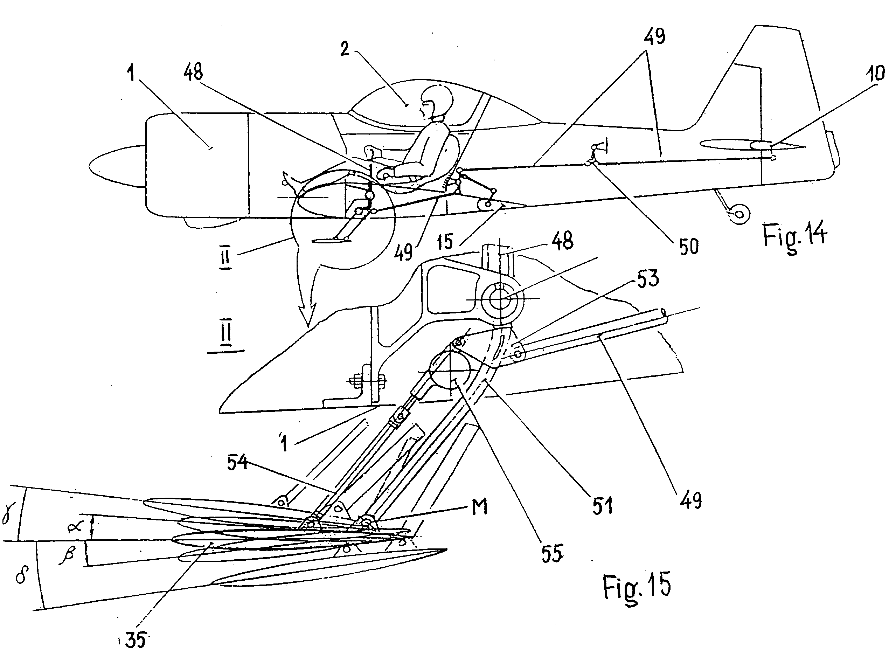

fig.14 - the installation of the trim tab-balance in the pitch channel of the manual control system;
fig.15 - unit II fig.14;

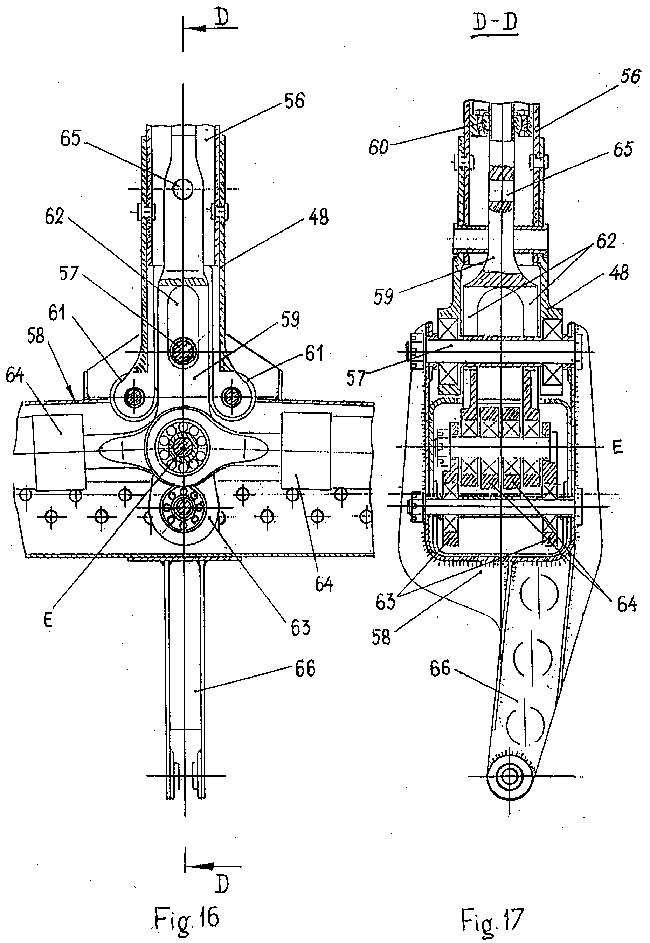

fig.16 - the hinge unit of the airplane control stick;

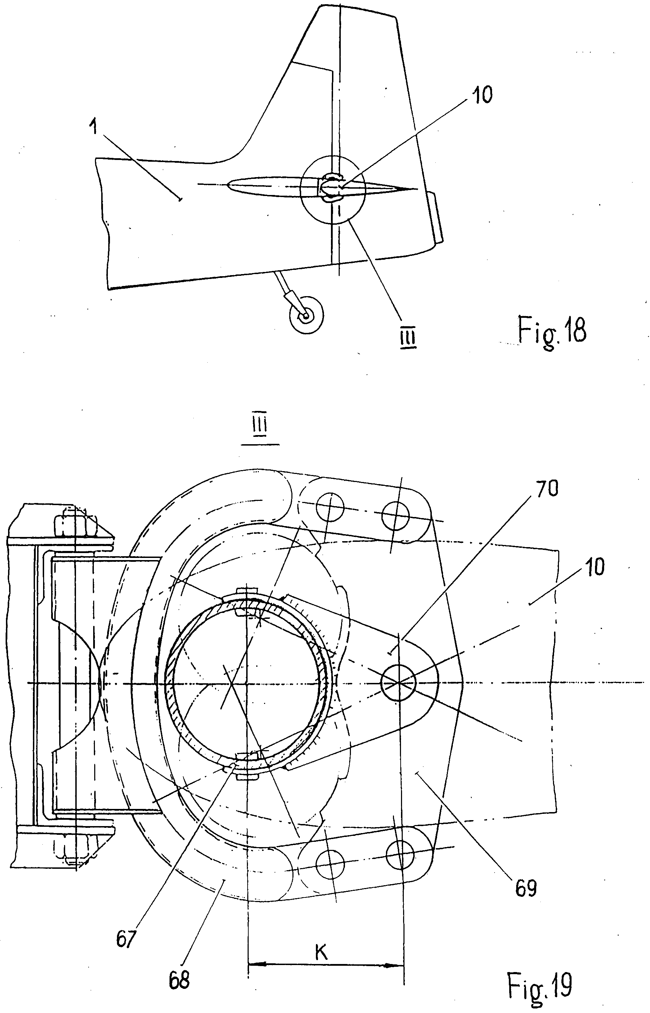

fig.17 - the sectional view D-D fig.16;
fig.18 - the elevator at the airplane stabiliser;
fig.19 - unit III fig.18 - the elevator hinge unit device;

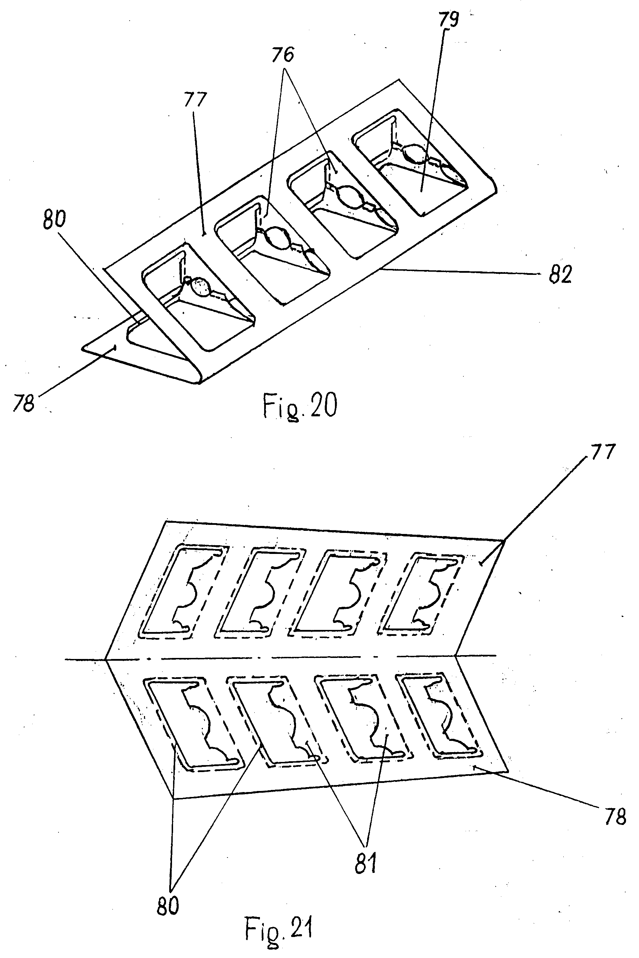

fig.20 - the tail contour framework of an aerodynamic control;
fig.21 - the sheet for the framework fabrication;

An acrobatic airplane contains the fuselage 1 with the cockpit 2, enclosed by the canopy. The canopy consists of the stationary part 3, rigidly connected with the fuselage 1, and the hingeing part 4. The power plant locates at the nose part of the fuselage 1 and consists of the engine 5, enclosed by the cowling 6 along its perimeter, and the tractor propeller 7, which has the propeller spinner 8. The airplane tail unit is of a normal lay-out and consists of the tailplane 9 with the elevator 10, and the fin 11 with the rudder 12, which has the balance 13, fulfilled as a $\Pi$ - shaped metal flanged plane and installed at the rudder 12 trailing edge. The low-set wing 14 with the high-lift devices along the wing trailing edge has the ailerons 15 and the trailing-edge flaps 16. The airplane tricycle spring landing gear has the tailwheel unit 17 and the main landing gear legs 18. The cowling 6 outboard edge profile is patterned after the wing aerodynamic section. The cowling 6 is fulfilled vi a Tawnend circle form, developed across the width, which is rigidly connected with the fuselage 1 nose part by the load-bearing structs 19,forming the exhaust air blower ducts of the engine 5 cylinder heads, all along the perimeter of the cowling 6. The stationary propeller spinner 8 extention 20 is rigidly connected with the cowling 6 and is fulfilled immovable, extending ahead of the cowling 6 front edge, cylindrical as an aerodynamic propeller 7 spinner 8 extension and proportional to the maximum spinner 8 diameter. The canopy hingeing part 4 consists of the canopy transparency 21 and the frame 22, rigidly connected with the transparency 21. The frame 22 has the hinge units 23 for hingeing it to the fuselage 1. The front part 24 of the canopy frame 22 is fulfilled as a part of the upper curvilinear surface of the fuselage 1, which mates with it as the blind of the instrument panel 25. The plane 26 of the frame 22 lower section of the canopy hingeing part 4 is located lower than the maximum width plane 27 of the canopy hingeing part 4 transparency 21 cross-section and is parallel to it. The hinge units 23 are aligned at the frame 22 back part. The hinge units 23 axes are normal to the airplane longitudinal axis and are situated in the plane, enclosed on some interval by the maximum width plane of the transparency 21 cross-section at one side and on the other side by the plane 26 of the frame 22 lower section. The canopy is provided with the bracket 28 and the resilient member 29. The resilient member 29 has its one end fixed to the bracket 28, and the other end fixed to the fuselage 1 load-bearing structure. The distance between the hinge units 23 of the canopy hingeing part 4 and the fuselage 1 is equal to the fuselage maximum width at a place of the canopy hingeing part 4 hingeing.

The fuselage 1 is provided with longitudinal vertical belly fence 30 with its lower edge parallel to the airplane longitudinal datum line, where the rudder 12 and the elevator 10 control linkages (not shown) are located, the spring of the tail landing gear leg 17 also passes through the belly fence. The rudder 12 lower edge is fulfilled as a belly fence 30 extension and is also parallel to the airplane longitudinal datum line. The engine bay is provided with the tubular air manifold 31 receiving the engine 5 - compartment cooling air, with the provision of the heated by the engine 5 cooling air extraction, from the branch pipe 32 under the fuselage 1 nose part. The wing 14 is provided with the wing leading edge root extention 33, which increases the wing 14 area, flowed by the propeller 7 and served by the flap 16. The engine 5 output shaft (not shown) passes through the stationary spinner 8 extention 20. The pilot's seat 34 with the seat-back controlled reclining angle is provided with the seat-back reclining device. The rudder 12 trailing edge is blunt and the rudder balance 13 is fulfilled demountable and rearrangable. In the pitch channel of the manual control system, the elevator trim tab-balance 35 is installed. The hinge device of the airplane cockpit 2 canopy hingeing part 4 has the cross tube 36 with the bracket 28 and the resilient member 29, which connects the bracket 28 with the airplane fuselage 1. The fasteners 37 at the back part of the cockpit 2 are connected between each other by the tube 36. Each of the fasteners 37 consists of a slider bearing 38, rigidly fitted to the airplane fuselage 1. The end of the cross tube 36 is installed inside the slider bearing 38 by the bush 39 and the shoulder with the possibility of sliding inside it in association with the bush 39. The movable axle-journal 40 fitted by it's one end into the tube 36 has the pin 41 pressed in. The ends of the pin 41 are located in the alighned grooves 42 and 43, turned on the cross tube 36 and on the bush 39 surfaces. The ends of the pin 41 also interact with the diametrically opposite curvilinear grooves 44 (turned on the slider bearings 38), which have the smoothly mated radial and helical sections. The axle-journal 40 free end is manufactured as a right prism 45 interacting with its associated bed 46, which is done on the hollow bush 47, fixed at the canopy hingeing part 4. The axled movement of the right prism 45 in its bed 46 is less than the axled movement of the pin 41 ends in the curvilinear grooves 44 along the both sections. The manual control system containes the control stick 48, the trim-tab-balance 35 and the control linkage, which consists of the control rods 49 and bellcranks 50. The probe 51 rigidly connected with the control stick 48 is the control stick 48 extention. It (51) comes out through the cockpit 2 floor 52 beyond the airplane fuselage 1 contours. The bracket 53 is installed at the probe 51 The trim tab-balance 35 is hinged to a probe 51 free end. The additional rod 54 of the controlled length is hinged to the trim tab-balance 35 by its one end (at some distance from the hingeing point at the probe 51) and by another is connected with its drive unit 55, hinged to the probe 51 bracket 53. The elevator 10 control rods 49 arrangement runs from the probe 51 bracket 53. The control stick 48 with the grip 56, is hung up at the central control beam 58 by the hinge axis 57. The extensile lever 59 is built-in the control stick 48 cavity. It is installed by its upper part in the sliding directing device 60, and by its lower part in the support rollers 61. This allows free axial transferal of the extensile lever 59 under the control stick 48 deflection.

The longitudinal slot 62 is cut through in the extensile lever 59 within the hinge axis 57 area of the control stick 48 for the provision of its (59) axial transferal.

The stirrup 63 is hinged to the central control beam 58. The other stirrup 63 end is hinged to the extensile lever 59 lower end (point E). The roll control circuit rods 64 are also hinged to the extensile lever 59 lower part at a point E.

It is possible to cut the hole 65 in the extensile lever 59, and with its help to interlock the extensile lever 59 at its lower extreme position and to transform the proposed device into a common device with the linear characteristics in the roll channel by the stirrup 63 detachment . The bank control linkage lever 66 is attached to the central control beam 58.

Each half of the elevator 10 contains the elevator tubular spar 67. The support 68 bracket is of a C-shaped form. Its free ends are rigidly connected together by the profiled plane 69. The elevator 10 is hinged to the profiled plane 69 by the elevator 10 bracket 70 in such a manner that the elevator 10 tubular spar 67 locates at some distance K ahead of the elevator 10 hinge unit axis 0, following the direction of flight. The profiled plane 69 has the limit stops 71 and 72, which interact with the tubular spar 67 at the extreme positions of the elevator 10.

The cowling 6 outboard edge profile in patterned after the wing aerodynamic section with its chord parallel to the airplane longitudinal datum line. This profile is specified and determined by the data, given and tabulated in the 6$^{\underline{th}}$ point of the formulation of the invention.

The rudder 12 is provided with the Π-shaped load-bearing member 73, which forms its blunt trailing edge. The rudder balance 13 is screwed (74) by it's snubber to the Π-shaped load - bearing member 73 with the possibility of the rearrangement. The anchor nuts 75, matching the balance 13 screws 74, are installed at the Π - shaped load-bearing member 73.

In the tail contour framework of each airplane aerodynamic controls, the framework 76 is fulfilled as a sheet, which forms the upper 77 and the lower 78 framework panels, where cutouts 79 with flangings 80 and shoulders 81 are fulfilled. The framework trailing aerodynamic edge 82 is formed by the sheet bending line. The panels 77 and 78 flanges 81 disposed one opposite to the other are in pairs are lap-spliced, forming the lateral framework 76 members. The distance between the panels 77 and 78, is defined individually in every specific case, and fits in with the control aerodynamic profile at each point .

The cockpit 2 canopy can be provided with the demountable nosing-over safe guard 83, which is internal in reference to the canopy transparency 21. The safe guard 83 can be installed by the canopy hingeing part 4 framework 22 units (not shown) at a junction of it and the canopy transparency 21. The seatback 34 reclining device can be designed for example as a worm-and-worm pair (not shown) with its rod connected with the seat-back 34. The seat-back 34 is provided with the drive unit in the hydraulic or in the pneumatic cylinder (not shown) form with the locks respectively connected with the airplane hydro or pneumatic systems.

An acrobatic airplane is functioning in the following manner.

The pilot occypies the pilot's seat 34 at the cockpit 2 before the flight. The seat-back reclining angle is adjusted and arranged beforehand. The canopy hingeing part 4 is opened. When the canopy hingeing part 4 is closed, the pilot starts up the engine 5, which brings the propeller 7 into operation, setting up the thrust. The airplane begins its movement, moving at the wheeled landing gear legs 18 and 17. After the airplane is wheeled out at the runway it begins the takeoff run on command. And when the takeoff speed is achieved, it takes off. The airplane is controlled in a common manner during the flight - the control stick 48 deflects the ailerons 15 and the elevator 10, and the pedals deflect the rudder 12. The propeller 7, inducing the thrust, rejects the air rearward to the engine 5 cowling. At the expense of the spinner 8 extention 20 availability, the air, which comes from the propeller 7, interacts with the engine 5 cowling 6 not immediately, but after a time, before the air travells the distance equal to the spinner 8 extention 20 overhanging length (ahead of the cowling 6). This insignificant time delay, allows firstly - to realize the propeller 7 efficiency the most completely, secondly - "to prepare" the air flow, which comes from the propeller 7 for flowing over the fuselage 1, thirdly - to reduce the rejected air dynamic loads on the engine cowling 6 which are created by the propeller. This mutual arrangement of the propeller 7 and the cowling 6 with the availability of the spinner extention 20 gives a certain advantage to this airplane.

The 5M-14P engine, installed at this airplane - is an air cooled engine. It is enclosed by the cowling 6 in the extended, along the airplane axis, Tawnend circle form. The engine 5 cylinders heads are the most temperature loaded engine 5 elements, flowed by the approach airflow. This airflow heats by them up and at the same time cools them down. The heated airflow is carried away to the atmosphere with the help of the exhaust air blower ducts of the engine 5 cylinder heads, formed by the load - bearing struts 19. They connect the cowling 6 with the fuselage 1 along the perimeter of the cowling 6. The cooling air, heated up by other engine 5 elements, is collected by the tubular air manifold 31 and is rejceted from the branch pipe 32 under the fuselage 1 nose part, and this has no adverse effect on the wing 14 blowing, because the heated air is not in the immediate contact with it, excepting the air heated by the engine 5 cylinder heads, which goes all the way through the cowling 6.

The approach airflow passes over the wing 14 in the following manner. An applied acrobatic airplane is provided with the direct lift control system (DLCS). By this is meant that, when the control stick 48 is deflected by the pilot "towards you - away from you", not only the elevator 10 deflects, but also the ailerons 15 and the flaps 16. And in the roll channel only the ailerons 15 deflect, when the control stick 48 is deflected towards "the right - the left". Each of the outboard wing 14 panels root parts is blowed by the propeller 7. The wing 14 blowing by the propeller 7 increases the lift force at the blowed wing area in comparison with the wing 14 sections, which are not blowed by the propeller 7, and are blowed only by the approach airflow. Yet,precisely at the root part of each outboard wing 14 panels the wing root gloves 33 are made. They increase the wing area, flowed by the propeller 7 and served by the flap 16, and accordingly increase the area, where the lift force increment, owing to the propeller 7 air flow, takes place.

Coupled with the DLCS, this causes the displacement of the application point of the lift force Y resultant towards the root of each outboard wing 14 panels. This gives the chance to reduce the spar mass, because of the arm of the applied force Y decrease and correspondingly to reduce the bending moment, which provides a way of the wing 14 panels parts mass reduction. The reduction of masses, spaced apart from the airplane X axis, allows the moment of inertia decrease about its X axis. The decrease of the moment of inertia about the X axis allows the reduction of the required ailerons 15 area in order to ensure the predetermined $\omega_x$ all things being equal. The ailerons 15 area decrease in its turn causes the reduction of the hinge moment and the decrease of the dunamic component of the control in roll force, through the decrease of aileron 15 moment of inertia. And finally, this causes the attainment of one of the applied technical results - the reduction of the control-stick 48 force under the control in roll. In such a manner the wing root glove 33 is functionally included as a component of the DLCS and it allows the realization of one of the applied technical results.

As far as the cockpit 2 canopy design, its operation and its jettisoning in case of the emergency escape are concerned, the following should be pointed out. On the ground before the departure, during the preflight preparation or in case of any work in the cockpit, the canopy is clamped in position, as an example by the saparable strut, hinged to the canopy hingeing part 4 and fixed on it in a removed state. The boarding-landing of the pilot and all other necessary operations are executed in such a position.

The pilot from the cockpit manually closes the canopy before the flight. The takeoff and the flight are brought off in such a configuration. The canopy design ensures the pilot-friendly vision and provides the all necessary conditions for flying according to the flight program. The framework 22 front part 24 ensures the instrument panel 25 darkening against the direct sun rays, which is necessary for reading the indicated values of the instruments with light warning and digital indication. It is ensured by the fact that, the framework 22 front part 24 is, at the same time, the instrument panel 25 blind.

The canopy hinge units 23 offset along the whole fuselage 1 width at the canopy hingeing part 4 attachment point, allows to produce the less heavy-duty framework 22 and the hinges for the reaction to the side bending force.

In the case of warning situation, when it is necessary for the pilot to escape from the airplane, the pilot manually opens the fasteners, opens partly the canopy. Next, there is no need of a great force application for the canopy hingeing part 4 opening, because, firstly the risilient member 29 begins to effect on the canopy hingeing part 4 by the bracket 28 producing the forces for the canopy opening, and secondly -the velocity head by its effect favours the canopy hingeing part 4 opening. The greater is the opening angle, the greater canopy opening is effected by the velocity head. After traversing static position, the canopy hingeing part 4 continues its turning under the action of the velocity head pressure. The hinge units 23 assure the automatic separation and jettisoning of the canopy hingeing part 4. Thereafter the pilot may freely escape from the cockpit.

The canopy design assured freely pilot's escape from the airplane after the canopy hingeing part 4 is jettisoned.

The processes, which take place in the hinge unit mechanism of the canopy hingeing part (CHP) 4 during the operation and in the case of the emergency jettisoning of the CHP.

In the course of the operational canopy opening, the pilot manually opens the fixing arms of the "closed position" (not shown) and the CHP 4, under the action of the resilient member 29, through the use of the bracket 28 and the cross tube 36, opens and takes up the static position. Thereafter the CHP is fixed in this position (not shown). During the operational canopy opening and closing, the ends of the pins 41 are sliding along the slider bearing 38 curvilinear grooves 44, which are fulfilled radial along the cylindrical generating line of the slider bearings 38, that is, they are normal to the cross tube 36 axis. As this takes place, the axle-journal 40 free ends by its' right prisms 45 are in full engagement with the hollow bush 47 bed 46 at the CHP 4. The applied fasteners 37 design completely provides the operational functioning of the airplane canopy.

In the case of the emergency CHP 4 jettisoning necessity in the flight, the pilot manually opens the CHP fixing arms of the "closed position" (not shown), and opens partly the cockpit canopy. The velocity head force will encrease as the canopy opens, owing to the CHP 4 drag increase. The ends of the pin 41 are sliding along the section of the operational curvilinear grooves 44 opening, along the cylindrical generating line of the slider bearings 38, normally to the cross tube 36 axis. When static position in the process of jettisoning is attained by the CHP 4, the ends of the pins 41 find themselves in the curviliniar grooves 44 sections, grooved along the helical lines. These sections smoothly adjoint the radial sections of the grooves 44. As this takes place, the pins 41 fixed in the axle-journals 40 with the axle-journals themselves 40 being under the action of CHP 4, which continues its turn and the hollow bush 47, start their movement in the axial direction inward the cross tube 36, sliding at the same time along the alighned grooves 42, 43 of the cross tube 36 and of the bush 39. By doing so, the axle-journals 40 free ends in the right prism 45 form, drop out of the engagement with the hollow bush 47 beds 46,and the CHP 4 completely rids of the airplane fuselage 1, and freely and safely for the pilot, separates itself from it. The pilot may escape from the cockpit 2. The axial movement "a" of the axle-journal 40 prisms 45 in the hollow bushes 47 beds 46 is done slightly lesser than the pins 41 ends axial movement "b" along the curvilinear grooves 44. This provides and insures the reliable and trouble free CHP 4 separation from the airplane.

There is a trim tab-balance 35 in the pitch channel of the manual control system, which functions in the following manner.

In the flight the pilot deflects the elevator 10 by the control stick 48 deflection through the control rods 49 and the control bellcranks 50. The airplane executes evolutions in the preset regime. By the control stick 48 deflection about point A in the course of the control in pitch, the pilot simultaneously deflects the probe 51, rigidly connected with the control stick 48 and as a consequence the trim tab-balance 35 hinged to it, through $\gamma$ and $\delta$ angles. As this takes place, an aerodynamic force appears on the trim tab-balance 35, which is fulfilled as an airfoil of a small ratio, $2\div3$. This aerodynamic force is directed either upwards, for the, deflection through the $\gamma$ angle, or downwards for the deflection through the $\delta$ angle. This force, applied at a fixed arm about point A, causes the hinge moment occurence about it. The occured moment either summed up or substructed from the elevator 10 hinge moment on the control stick 48. As this takes place, the scope for the trim tab-balance 35 deflection through $\alpha$ and $\beta$ angles about point M, when $\alpha$ and $\beta$ are of current value still persists. The trim tab-balance 35 deflection is executed through the use of the additional rod 54 of the controlled length, with the switched-on drive unit 55. This causes the obtainment of the trimming effect - the complete unloading or reduction of loads on the commanding levers, in this instance - on the control stick 48. When the flaps 16 and the drooping ailerons 15, located at the wing, are included as the components of a longitudinal control channel and when the direct lift control system is exerted, the suggestion allows to reduce the resultant hinge moment on the airplane control stick 48 most efficiently, and at the same time provides means for the airplane longitudinal trimming for the lack of the elevator 10 trimmers.

In the flight, the elevator 10, deflecting from its neutral position about point 0, brings about the control force, which is transfered to the airplane by the profiled plane 69 and by the support 68 bracket. The elevator tubular spar 67, located at K distance ahead of the point 0, in itself plays the role of the balance weight. The elevator spar 67 coordinate K, as well as its geometrical characteristics, which follow from the airplane flight performance, are chosen in such a way as to provide the desirable degree of the elevator 10 balance. This allows completely get rid of the additional balance weight. The limit stops 71, 72 confine the elevator 10 travel in the preset range. It is significant that the additional place for the limit stops 71, 72, which interact with the main elevator 10 load-bearing member - the elevator 10 spar 67, is not warranted. The additional contact areas for the confine of the elevator 10 travel, except the profiled plane 69, are not warranted. The functions of the weight balancer are given to the elevator 10 spar 67, and this allows the significant improvement of the elevator mass - lag characteristics, owing to the execution of the change-over from the balance concentrated weight to the distributed weight. The airplane rearward flight in the performance of the vertical stall acrobatic maneuver, is one of the issued flight regimes of an acrobatic airplanes. As a rull, the complete aerodynamic overbalance (10) comes in the performance of the maneuver of this sort. The lack of the stops, identical to the proposed ones, causes the off-design angles of the elevator surfaces deflection, at the expense of the control linkage elastic strain, and as a consequence their deformation and failue. As this takes place, in accordance with the proposal, the elevator 10 deflects from its neutral to its extreme position, and the limit stops 71, 72 immediately interact with the elevator tubular spar 67. And there is no control linkages elastic deformation.

In the roll channel of the manual control system, the control stick 48 is installed in such a manner that, the nonlinear characteristics securing in the roll channel is ensured, that is, at the close to zero control stick 48 position, the ailerons 15 sensitivity is reduced at the sacrifice of a small gearing ratio, and is increased, at the sacrifice of the gearing ratio increase at the control stick 48 extreme positions. This ensures the convenience of the acrobatic piloting.

The control stick 48 deflection causes the displacement of the extensile lever 59 end point E in a circle, defined by the radius, which is equal to the distance between the stirrup 63 hinges. As this takes place, the extensile lever 59 arm increases at the expense of its axial displacement as the control stick 48 deflects, increasing its (48) gearing ratio.

In the case of the airplane asymmetry, the balance 13 is installed in the yaw-control channel, and is screwed (screw 74) to the blunt trailing edge of the rudder 12. After the airplane "unsymmetry" measurements in the yaw-control channel, and after the deflection of the yaw-control pedals, the balance 13 can be again turned over and rearranged, in the of wide deviation from the given value. For this purpose it is necessary to remove the screws 74 and to screw the balance 13 to the rudder 12 trailing edge again. If the "unsymmetry" is not great, the balance 13 can be removed and can be folded separately by a special contrivance or manually. As this takes place, it is significant that, the trailing edge is not damaged and is free from all the additional loads. It is particularly important, if the rudder 12 has the fabric-coverings. Even though, the trailing edged 12 with the fabric-coverings has the Π-shaped load-bearing member 73, the latter strengthens only the trailing edge and does not prevent its bending relative to the rudder 12, in the balance 13 control immediately at the rudder 12 without its removing, in the case of the monolithic balance 13 attachment to the trailing edge. In the absence of the rudder 12 "unsymmetry", the balance isn't installed.

The cockpit 2 canopy is provided with the separable nosing-over safe guard 83. The nosing-over safe guard 83 is necessary in the event of the airplane emergency landing on the unprepared landing place by not highly qualified pilot with a high probability of the airplane nosing-over and of the transparency 21 strike against the ground . It can take place when airplane ferrying from one airdrome to the other or when piloting it by a novice pilot. In this case, the separable nosing-over safe guard 83 is installed, which is at the disposal in the kit of every airplane. In the case of the acrobatic piloting tournament above the special airdrome by the high-class pilots the nosing-over safe guard 83 is removed because above the airdrome the unprepared place landing is highly improbable and consequently there is little likelihood of the airplane nosing-over. The belly fence 30 with the lower edge parallel to the airplane longitudinal datum line is favourable for the visual control over the correctness of an acrobatic maneuver performance, what is very important.

By this means, this airplane of interest is provided with all the required characteristics of an acrobatic airplanes, and for a number of parameters it excelles the all known currently available analogous airplanes.

**Claims**

1. An acrobatic airplane containing the fuselage with the cockpit, enclosed by the hingeing canopy, which consists of the stationary and the hingeing parts; the power plant, located at the fuselage nose part, which consists of the engine, enclosed by the cowling along its perimeter, and the tractor propeller, which has the propeller spinner; the tail unit of a normal lay-out, which consists of the tailplane with the elevator and the fin with the rudder (the rudder has the balance, fulfilled as a metal flanged plane, installed at the rudder trailing edge); the low-set wing with the high-lift devices along the wing trailing edge; the manual control system, governed by the control stick, the foot pedal control system, governed by the pilot's pedals and the control linkages; the tricycle spring landing gear with the tailwheel unit,differs in that the cowling outboard edge section, which encloses the engine along the perimeter, is modelled on the wing airfoil section, and the cowling itself is fulfilled in the developed extended Tawnend circle form, which is rigidly connected with the fuselage nose part by the load-bearing struts, forming the exhaust air blower ducts of the engine cylinder heads, all along the perimeter of the cowling, and which is provided with the stationary propeller spinner extention proportional to the maximum spinner diameter, it extends ahead of the cowling front edge, being rigidly connected with the cowling, the spinner extention is fulfilled cylindrical as an aerodynamic propeller spinner extension; the cockpit canopy consists of the stationary part, rigidly connected with the fuselage, and the hingeing part, fulfilled as the frame with the transparency, the hingeing part is installed at the fuselage by the hinges, which are spaced apart at a distance equal to the maximum fuselage width, and the plane of the frame lower section of the canopy hingeing part is located lower than the maximum width plane of the transparency cross-section and is parallel to it, the hinge units of the canopy hingeing part are located at its frame back part, and are in line with each other, with the arrangement of their axes normally to the fuselage longitudinal axis, they are located between the cross-section maximum width plane of the canopy hingeing part transparency and the plane of its frame lower section, the front part of the frame is fulfilled as a part of the upper curvilinear surface of the fuselage, which mates with it as the blind of the instrumental panel, the fuselage is equiped with the longitudinal vertical belly fence with its lower edge parallel to the airplane longitudinal datum line, where the control linkages of the elevator and of the rudder are located, the spring of the tail landing gear leg also passes through the belly fence, the rudder lower edge is fulfilled as an extension of it and is also parallel to the airplane longitudinal datum line; the engine bay is provided with the tubular air manifold, receiving the engine-compartment cooling air, with the provision of the heated air extraction from the branch pipe located under the fuselage nose part; the wing is provided with the flap and with the wing leading edge root extension , which increases the wing area flowed by the propeller and served by the flap, the engine output shaft to the propeller passes through the stationary spinner extention, the pilot's seat with the seat-back controlled reclining angle is provided with the seat-back reclining device; the rudder trailing edge is blunt and the rudder balance is fulfilled demountable and rearrangable, and the elevator trim tab-balance is installed in the pitch channel of the manual control system .

2.  An acrobatic airplane according to the 1st point, differs in that the canopy is provided with the cross tube with the bracket, connecting the canopy hingeing part hinges together, and with the resilient member, which connects the bracket to the airplane fuselage, each of the canopy hingeing part hinge units is produced as a slider bearing, rigidly fitted to the airplane fuselage (the end of the cross tube is installed inside the slider bearing by the bush and the shoulder with the possibility of sliding) and the movable axle-journal, installed by its one end inside the tube with the pin pressed in, the ends of the pin are located in the aligned grooves turned on the cross tube and on the bush and interact with the diametrically opposite curvilinear grooves (turned on the slider bearings), which have smoothly mated radial and helical sections, the free end of each axle - journal is manufactured as a right prism interacting with the associated bed, which is turned on the hollow bush, fixed at the hingeing canopy part, the axled movement of the right prism of a movable axle-journal end in the hollow bush bed is less than the axled movement of the movable axle - journal pin in the curvilinear grooves of the slider bearing along the both sections.

3.  An acrobatic airplane according to the 1st point, differs in that in the manual control system the control stick is provided with the probe, rigidly connected with it, being its extension, the probe comes out through the pilot's cabin floor beyond the fuselage lower contours and is provided with the bracket, which is rigidly fitted on it and is connected with the additional rod of the controlled length with the drive unit, the trim tab - balance is fulfilled as an aerodynamic surface of a small extension, hinged to a probe free end, the additional rod of the controlled length is hinged by its one end to the trim tab-balance at some distance from trim tab-balance hingeing point at the probe, and by another is connected with the drive unit, hinged to the probe bracket, the elevator control linkage runs from the probe bracket.

4.  An acrobatic airplane according to the 1st point, differs in that the control stick with the grip, hung up by the axis at the central control beam and connected with the roll control linkage rods and with the pitch control linkage lever the pitch linkagecontrol rods, has a built-in extensile lever, which is fitted into it with the possibility of the axial transferal, as this takes place, the roll linkage control rods and the stirrup are hinged to the extensile lever lower end, and at the same time the stirrup has its opposite end hinged to the central control beam.

5.  An acrobatic airplane according to the 1st point, differs in that each half of the elevator contains the elevator spar, the support bracket and the elevator bracket which connects the spar with the C-shaped support bracket, the support bracket free ends are rigidly connected by the profiled plane, the C-shaped elevator spar is tubular and the elevator itself is hinged to the profiled plane in such a way that the elevator tubular spar locates at some distance ahead of the elevator hinge axis following the direction of flight, the profiled plane has the limit stops, which interact with the tubular spar at the extreme positions of the elevator.

6.  An acrobatic airplane according to the 1st point, differs in that the cowling outboard edge profile, patterned after the wing aerodynamic section with its chord parallel to the airplane longitudinal datum line, is specified and determined by the following tabulated data:

| $\overline{X}_B$ | 0 | 0,05 | 0,10 | 0,15 | 0,2 | 0,3 | 0,35 |
|---|---|---|---|---|---|---|---|
| $\overline{Y}_B$ | 0 | 0,071 | 0,10 | 0,114 | 0,121 | 0,132 | 0,136 |

| $\overline{X}_B$ | 0,4 | 0,5 | 0,6 | 0,7 | 0,8 | 0,9 | 1,0 |
|---|---|---|---|---|---|---|---|
| $\overline{Y}_B$ | 0,132 | 0,121 | 0,107 | 0,086 | 0,064 | 0,029 | 0 |

7. An acrobatic airplane according to the 1st point, differs in that the rudder is provided with the Π - shaped load-bearing member, which forms its blunt trailing edge, and the rudder balance is fulfilled as a Γ - shaped plane, screwed by it's snubber to the Π - shaped load - bearing member with the possibility of the removal and rearrangement, the anchor nuts, matching the balance screws, are installed at the Π - shaped load - bearing member.

8. An acrobatic airplane according to the 1st point, differs in that in the tail contour framework of each airplane aerodynamic controls, the framework is fulfilled as a sheet, which forms the upper and the lower framework panels, where cutouts with the flangings and the shoulders are fulfilled, and the controls each have the trailing aerodynamic edge, formed by the sheet bending line, the upper and the lower panels flanges are in pairs jointed with each other, and the distance between the panels fits in with the control aerodynamic profile at each point.

9. An acrobatic airplane according to the 7th point, differs in that the upper and the lower panels flanges are lap-spliced between each other.

10. An acrobatic airplane according to the 1st point, differs in that the canopy is equiped with the demountable nosing-over safe guard, internal in reference to the canopy transparency, it is installed at the canopy hingeing part framework by the hinge units at the junction of it and the canopy transparency.

11. An acrobatic airplane according to the 1st point, differs in that the seat-back reclining device is designed as a worm-and-worm pair, with its rod connected with the seat-back, the seat - back is provided with the drive unit in the hydraulic or in the pneumatic cylinder form with the locks, respectively connected with the airplane hydro or pneumatic systems.

Fig.1

Fig. 2

Fig. 3

Fig.4

16

Fig. 5

Fig. 6

Fig. 7

C-C

Fig. 11

I

Fig. 8.

View B

A-A

Fig. 9

Fig. 10

Fig. 12

G - G

Fig.13

Fig.14

Fig.15

Fig. 16

Fig. 17

Fig. 18

Fig. 19

Fig. 20

Fig. 21

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| A | FR-A-2 440 872 (YAKOVLEV)<br>* page 1, line 1 - page 2, line 7 *<br>* page 2, line 34 - page 4, line 1 *<br>* page 5, line 12 - line 28 *<br>* page 7, line 22 - page 8, line 37; figures 1-3 * | 1 | B64C1/00 |
| A | US-E-18 115 (BELLANCA)<br>* the whole document * | 1 | |
| A | GB-A-571 741 (BRISTOL AEROPLANE COMP.)<br>* page 3, line 13 - line 62 *<br>* page 4, line 10 - line 45; figure 1 * | 1 | |
| A | EP-A-0 292 655 (PORSCHE)<br>* column 3, line 14 - column 4, line 5; figure 1 * | 1 | |
| A | US-A-2 738 972 (MORRIS)<br>* column 1, line 66 - column 2, line 2; figure 1 * | 1 | TECHNICAL FIELDS SEARCHED (Int. Cl.5)<br><br>B64C<br>B64D |

The present search report has been drawn up for all claims

| Place of search | Date of completion of the search | Examiner |
|---|---|---|
| THE HAGUE | 23 SEPTEMBER 1993 | ZERI A. |

EPO FORM 1503 03.82 (P0401)